# EUROPÄISCHE PATENTSCHRIFT

(11) **EP 0 612 924 B1**
(45) Veröffentlichungstag und Bekanntmachung des Hinweises auf die Patenterteilung: **27.09.1995**
(21) Anmeldenummer: 94810096.1
(22) Anmeldetag: 18.02.1994
(51) Int. Cl.: F16B 13/12

(54) **Spreizdübel mit Hülse und Spreizkörper**
Expansion dowel with sleeve and expandable element
Cheville à expansion avec manchon et élément d'expansion

(30) Priorität: 22.02.1993 DE 4305381
(43) Veröffentlichungstag der Anmeldung: 31.08.1994
(73) Patentinhaber: HILTI Aktiengesellschaft, 9494 Schaan (LI)
(72) Erfinder: Forster, Hubert, D-82272 Moorenweis (DE)
(74) Vertreter: Wildi, Roland

(56) Entgegenhaltungen:
- EP-A- 0 118 006
- FR-A- 2 349 054

## Beschreibung

Die Erfindung betrifft einen Spreizdübel mit einer Spreizhülse, die zum setzrichtungsseitigen Ende hin offene Längsschlitze sowie eine sich zum setzrichtungsseitigen Ende hin verjüngende Bohrung aufweist, wobei ein in die Bohrung der Spreizhülse einführbarer, sich wenigstens teilweise zum setzrichtungsseitigen Ende hin verjüngender Spreizkörper vorgesehen ist, der zur teilweisen radialen Verformung eine zum setzrichtungsseitigen Ende hin offene Ausnehmung aufweist.

Spreizdübel der vorgenannten Art sind ausserordentlich stark verbreitet. Sie finden in Gestein, Beton, Mauerwerk und dergleichen Aufnahmematerialien Anwendung.

Gesetzt werden die Spreizdübel in aller Regel derart, dass in einem ersten Arbeitsgang im Aufnahmematerial eine Aufnahmeöffnung hergestellt wird und nach Einsetzen des Spreizdübels in diese Aufnahmeöffnung die Spreizhülse durch Vortreiben eines Spreizkörpers in Setzrichtung gespreizt wird. Zum Spreizen wird dabei ein Setzwerkzeug in Form eines Domes verwendet, welches in Verbindung mit einem entsprechenden Antriebsgerät auf den Spreizkörper Schläge abgibt.

Um den Spreizvorgang sicherzustellen und aus der Sicht der Bedienungsperson auch zu erleichtem, wird derart verfahren, dass der Spreizkörper mittels des Setzwerkzeuges so lange in Setzrichtung vorgetrieben wird, bis er innerhalb der Spreizhülse eine bestimmte Tiefe erreicht hat. Diese Tiefe lässt sich nur über das Setzwerkzeug bestimmen, so dass die diesbezüglich zur Verwendung gelangenden Setzwerkzeuge beispielsweise mit einer entsprechenden Markierung versehen sein können, welche der Bedienungsperson anzeigt, wann der Spreizvorgang abgebrochen werden kann. Anstelle einer solchen Markierung findet in bevorzugter Weise als weitere Erleichterung für die Bedienungsperson eine Anschlagschulter, beispielsweise in Form eines Bundes, am Setzwerkzeug Anwendung, so dass nebst der reinen Sichtkontrolle noch eine absolute Kontrolle durch Wegbegrenzung des Setzwerkzeuges stattfindet.

Die vorgenannte Setzmethode hat den Nachteil, dass einerseits der Spreizkörper immer den selben Weg zurücklegt und damit die Spreizhülse immer in gleicher Weise aufweitet, unabhängig von den entgegen der Spreizkraft auf die Spreizhülse einwirkenden äusseren Kräfte. Dabei sind die auf die Spreizhülse einwirkenden äusseren Kräfte von verschiedenen Faktoren abhängig, beispielsweise insbesondere von der Beschaffenheit des Aufnahmematerials und vom Durchmesser bzw. der Genauigkeit der Aufnahmeöffnung im Aufnahmematerial. Somit kann es vorkommen, dass der konstante Weg, mit welchem der Spreizkörper innerhalb der Spreizhülse vorgetrieben wird im einen Extremfalle zu unzureichenden Verankerungswerten führt und im anderen Extremfalle durch Überbeanspruchung das Aufnahmematerial schädigt, so dass auch dieser Fall zu unzureichenden Verankerungswerten führt.

Zur Behebung des vorgenannten Nachteils wird entsprechend DE-A-26 17 191 vorgeschlagen, einen Spreizdübel mit einem Spreizkörper zu versehen, welcher radial verformbare Zonen aufweist. Auch bei diesem bekannten Spreizdübel wird der Spreizkörper innerhalb der Spreizhülse immer mit gleichbleibendem Weg vorgetrieben, wobei aber je nach Grösse der äusseren Kräfte die verformbaren Zonen des Spreizkörpers mehr oder weniger verformt werden. Damit ist eine die Verankerungswerte herabsetzende, durch Überbeanspruchung hervorgerufene Schädigung des Aufnahmemateriales unterbunden. Nachteilig wirkt sich bei diesem bekannten Spreizdübel allerdings die Ausbildung der am Spreizkörper vorgesehenen, verformbaren Zonen aus. Die vorgeschlagene Ausbildung in Form von Stegen oder Schlitzen, gegebenenfalls verbunden mit einer Ausnehmung lässt eine Steuerung des Verformungsverhaltens nicht zu. Damit kann keiner der vorgeschlagenen Spreizkörper aufgrund der verlorengegangenen Steifigkeit ausreichende Spreizkräfte erzeugen. Eine wesentliche Herabsetzung der mit diesem bekannten Spreizdübel erzeugten Verankerungswerte ist damit die Folge.

Der Erfindung liegt die Aufgabe zugrunde, einen Spreizdübel mit Spreizkörper zu schaffen, mit welchem bei konstantem Eintreibweg des Spreizkörpers in allen Anwendungsfällen ausreichend hohe Verankerungswerte erzielt werden.

Erfindungsgemäss wird die Aufgabe dadurch gelöst, dass die Ausnehmung des Spreizkörpers als Sacklochbohrung ausgebildet ist und der Spreizkörper an seiner der Setzrichtung abgewandten Stirnseite einen axial wegragenden Zapfen aufweist, dessen Axialprojektion des Querschnittes innerhalb der Axialprojektion des Querschnittes des benachbarten Bereiches der Sacklochbohrung liegt.

Zum Spreizen des erfindungsgemäss vorgeschlagenen Spreizdübels mittels Vortreiben des Spreizkörpers in der Spreizhülse wird wiederum ein auf den Spreizkörper einwirkendes Setzwerkzeug verwendet. Dieses Setzwerkzeug kann in bekannter Weise mit Mitteln versehen sein, welche einen bestimmten Vortreibweg des Spreizkörpers gewährleisten. Dabei greift das Setzwerkzeug an der entgegen der Setzrichtung rückwärtigsten Schulter des Spreizkörpers an, welche aufgrund der erfindungsgemässen Ausgestaltung des Spreizkörpers vom axial wegragenden Zapfen gebildet wird. Da dieser Zapfen, das heisst dessen Axialprojektion des Querschnittes innerhalb der Axialprojektion des Querschnittes des benachbarten Bereiches der im Spreizkörper angeordneten, zum setzrichtungsseitigen Ende hin offenen Sacklochbohrung liegt oder damit im wesentlichen fluchtet, bildet sich im Spreizkörper eine beispielsweise ringförmig verlaufende Sollbruchstelle. Diese Sollbruchstelle spricht an, wenn die auf die Spreizhülse einwirkenden äusseren Kräfte eine das weitere Vortreiben des Spreizkörpers hindernde Grösse annehmen. Damit verschiebt sich die vom Zapfen gebildete rückwärtigste Schulter relativ gegenüber dem Hauptteil des Spreizkörpers, so dass das Setzwerkzeug in seinem vorgegebenen Ausmass in die Spreizhülse hineingetrieben werden kann.

Die zum setzrichtungsseitigen Ende hin offene Sacklochbohrung führt nebst der Sicherstellung der Sollbruchstelle zu dem weiteren Vorteil, dass sich der Spreizkörper in begrenztem Masse abhängig von der äusseren Krafteinwirkung radial verformen kann. Diese radiale Verformung des Spreizkörpers spielt sich in einem derart begrenzten Rahmen ab, dass einerseits Überbeanspruchungen des Aufnahmematerials schon in einem bestimmten Mass unterbunden werden können, dass aber andererseits der Spreizkörper nicht in einer die Erreichung ausreichender Verankerungswerte in Frage stellenden Weise geschwächt wird.

Insbesondere aus herstellungstechnischer Sicht bringt es gewisse Vorteile, wenn Sackloch und Zapfen zentral zum Spreizkörper angeordnet sind. Zudem wird durch eine diesbezügliche zentrale Anordnung, insbesondere der Sacklochbohrung, eine gleichmässige radiale Verformung des Spreizkörpers erreicht.

Zweckmässigerweise verjüngt sich die Sacklochbohrung in Setzrichtung. Dadurch kann im Zusammenwirken mit dem abgetrennten Zapfen eine Steuerung und Begrenzung der radialen Verformbarkeit des Spreizkörpers erzielt werden, indem der Zapfen in die sich verjüngende Sacklochbohrung hineingetrieben wird und somit in gewisser Weise zu einer Aufweitung des Spreizkörpers führt. Da dieser Effekt insbesondere im Zusammenhang mit dem Ansprechen der Sollbruchstelle auftritt, das heisst in jenen Fällen, wo grosse äussere Kräfte einwirken, erfolgt die dadurch erzielte Aussteifung des Spreizkörpers gerade in jenen Fällen, wo grosse äussere Kräfte auftreten. Die Verjüngung der Sacklochbohrung kann dabei bevorzugt unter einem Kegelwinkel von etwa 5° bis 10° erfolgen. Damit entspricht dieser Kegelwinkel etwa der Grösse des Kegelwinkels, unter welchem sich die Bohrung der Spreizhülse verjüngt, das heisst ebenfalls unter einem Winkel von etwa 5° bis 10°.

Im Hinblick auf die Steifigkeit des Spreizkörpers wirkt es sich vorteilhaft aus, wenn der grösste Durchmesser der Sacklochbohrung etwa dem 0,3- bis 0,5-fachen des grössten Aussendurchmesser des Spreizkörpers entspricht.

Nachdem sich aus der Sicht der Erzielung einer einwandfrei wirkenden Sollbruchstelle die Axialprojektionen des Querschnittes der Sacklochbohrung und des Querschnittes des Zapfens mit Vorteil etwa überlappen, ist es zweckmässig, den Zapfen mit einem kreisrunden Querschnitt zu versehen, wobei vorzugsweise der Aussendurchmesser eines diesbezüglich ausgebildeten Zapfens dem 0,3- bis 0,5-fachen des grössten Aussendurchmessers des Spreizkörpers entspricht. Der Aussendurchmesser des Zapfens entspricht dabei im wesentlichen dem Durchmesser des benachbarten Bereiches der Sacklochbohrung, das heisst bei einer sich in Setzrichtung verjüngenden Sacklochbohrung dem rückwärtigsten und grössten Durchmesser.

Im Zusammenhang mit der durchmesserseitigen Dimensionierung des Zapfens wirkt es sich im Hinblick auf dessen Steifigkeit vorteilhaft aus, wenn dessen Länge etwa dem 0,3- bis 0,5-fachen des grössten Aussendurchmessers des Spreizkörpers entspricht.

Um aus der Sicht der Dimensionierung der Sollbruchstelle bevorzugte Verhältnisse zu erzielen, entspricht zweckmässigerweise die Länge der Sacklochbohrung dem 0,8- bis 0,9-fachen der ohne Zapfen gemessenen Länge des Spreizkörpers. Es wird demnach unter Länge des Spreizkörpers die Länge von der setzrichtungsseitigen Stirnseite bis zu der der Setzrichtung abgewandten Stirnseite, das heisst ohne den von dieser Stirnseite abragenden Zapfen verstanden. Die Bruchstelle weist damit eine axial gemessene Länge auf, die etwa dem 0,2- bis 0,1-fachen der zwischen den genannten Stirnflächen gemessenen Länge des Spreizkörpers entspricht.

Die Erfindung wird nachstehend anhand von Zeichnungen, welche ein Ausführungsbeispiel wiedergeben, näher erläutert. Es zeigen:
- Fig. 1: einen Spreizdübel gemäss Erfindung in setzbereitem Zustand;
- Fig. 2: den Spreizdübel der Fig. 1 in gesetztem Zustand ohne Ansprechen der Sollbruchstelle;
- Fig. 3: den Spreizdübel der Fig. 1 in gesetztem Zustand mit vollständig angesprochener Sollbruchstelle.

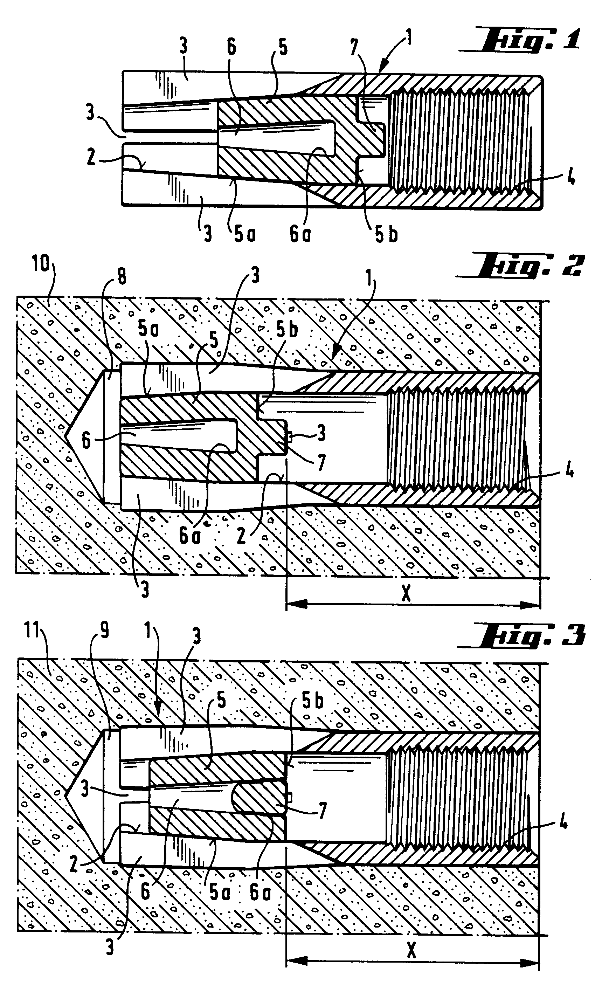

Der in Fig. 1 dargestellte Spreizdübel besteht aus einer Spreizhülse 1, welche eine sich zum setzrichtungsseitigen Ende hin verjüngende Bohrung 2 aufweist. Die Spreizhülse 1 ist mit Längsschlitzen 3 versehen, welche zum setzrichtungsseitigen Ende hin offen sind. In dem der Setzrichtung abgewandten Ende weist die Spreizhülse 1 ein Angriffsmittel auf, welches hier beispielsweise in Form eines Innengewindes 4 ausgebildet ist.

Innerhalb der Bohrung 2 ist ein Spreizkörper 5 gelagert. Dieser Spreizkörper 5 weist eine sich in Setzrichtung verjüngende Aussenkontur 5a auf und ist mit einer zum setzrichtungsseitigen Ende hin offenen Sacklochbohrung 6 versehen. Die Sacklochbohrung 6 verjüngt sich in Setzrichtung. Die der Setzrichtung abgewandte Stirnseite 5b des Spreizkörpers 5 wird von einem Zapfen 7 überragt. Wie die Fig. 1 und auch die Figuren 2 und 3 zeigen, entspricht im gewählten Beispiel die Axialprojektion des Querschnittes des Zapfens 7 im wesentlichen der Axialprojektion des Querschnittes des benachbarten Bereiches 6a der Sacklochbohrung 6.

Die Figuren 2 und 3 zeigen beide den Spreizdübel entsprechend Fig. 1, verspreizt in einer Aufnahmeöffnung 8, 9 eines Aufnahmemateriales 10, 11. In beiden Fällen ist der Spreizkörper 5 um das Mass X innerhalb der Bohrung 2 der Spreizhülse 1 vorgetrieben worden.

Im Extremfall einer Anwendung entsprechend Fig. 2 war die äussere Krafteinwirkung nicht allzu gross, so dass der Hauptteil des Spreizkörpers 5 ohne Ansprechen der im Bereich der Sacklochbohrung 6 und des Zapfens 7 vorgesehenen Sollbruchstelle über einen weiten Weg vorgetrieben wurde. Entsprechend ist die Spreizhülse 1 stark aufgeweitet worden. In diesem Falle, wo die äussere Krafteinwirkung nicht sonderlich gross war, kann es sich beispielsweise um relativ weiches Aufnahmematerial 10 oder grosse Toleranzen der Aufnahmeöffnung 8 handeln.

Den gegenteiligen Extremfall einer Anwendung zeigt Fig. 3, wo es sich beispielsweise um hartes Aufnahmematerial 11 oder eine mit ganz geringen Toleranzen versehene Aufnahmeöffnung 9 handeln kann. Aus diesen Gründen sind hier grosse äussere Krafteinwirkungen aufgetreten, so dass dem Vortreiben des Hauptteiles des Spreizkörpers 5 ein grosser Widerstand entgegengesetzt wurde. Dieser grosse Widerstand hat zu einem Ansprechen der im Bereich der Sacklochbohrung 6 und des Zapfens 7 vorgesehenen Sollbruchstelle geführt, so dass zwischen Zapfen 7 und dem Hauptteil des Spreizkörpers 5 eine Relativverschiebung aufgetreten ist. Diese Relativverschiebung hat dazu geführt, dass bei gleichbleibendem Weg X der Hauptteil des Spreizkörpers 5 weniger weit in die Spreizhülse 1 hineingetrieben worden ist, so dass deren Aufweitung gegenüber dem Anwendungsfall der Fig. 2 geringer ist.

Wie die Fig. 3 ferner deutlich zeigt, ist der Zapfen 7 in die Sacklochbohrung 6 hineingetreten und hat dort aufgrund der Verjüngung der Sacklochbohrung 6 zu einer Aussteifung des Spreizkörpers 5 beigetragen.

Wie die Figuren 2 und 3 zeigen, kann in beiden Extremfällen und selbstverständlich in allen dazwischenliegenden Fällen mit einem Spreizwerkzeug gearbeitet werden, welches den einheitlichen Weg X aufbringt. Damit ist mit dübelseitigen Mitteln sichergestellt, dass in allen Anwendungsfällen nach Aufbrauch des Weges X eine auf die jeweiligen Anwendungsverhältnisse optimale und zu grossen Verankerungswerten führende Verspreizung des Spreizdübels stattfinden.

## Patentansprüche

1. Spreizdübel mit einer Spreizhülse (1), die zum setzrichtungsseitigen Ende hin offene Längsschlitze (3) sowie eine sich zum setzrichtungsseitigen Ende hin verjüngende Bohrung (2) aufweist, wobei ein in die Bohrung (2) der Spreizhülse (1) einführbarer, sich wenigstens teilweise zum setzrichtungsseitigen Ende hin verjüngender Spreizkörper (5) vorgesehen ist, der zur teilweisen radialen Verformung eine zum setzrichtungsseitigen Ende hin offene Ausnehmung aufweist, **dadurch gekennzeichnet,** dass die Ausnehmungen des Spreizkörpers (5) als Sacklochbohrung (6) ausgebildet ist und der Spreizkörper (5) an seiner der Setzrichtung abgewandten Stirnseite (5b) einen axial wegragenden Zapfen (7) aufweist, dessen Axialprojektion des Querschnittes innerhalb der Axialprojektion des Querschnittes des benachbarten Bereiches (6a) der Sacklochbohrung (6) liegt.

2. Spreizdübel nach Anspruch 1, dadurch gekennzeichnet, dass Sacklochbohrung (6) und Zapfen (7) zum Spreizkörper (5) zentral angeordnet sind.

3. Spreizdübel nach Anspruch 1 oder 2, dadurch gekennzeichnet, dass sich die Sacklochbohrung (6) in Setzrichtung verjüngt.

4. Spreizdübel nach einem der Ansprüche 1 bis 3, dadurch gekennzeichnet, dass der grösste Durchmesser der Sacklochbohrung (6) dem 0,3- bis 0,5-fachen des grössten Aussendurchmessers des Spreizkörpers (5) entspricht.

5. Spreizdübel nach einem der Ansprüche 1 bis 4, dadurch gekennzeichnet, dass der Zapfen (7) einen kreisrunden Querschnitt mit einem Aussendurchmesser aufweist, der dem 0,3- bis 0,5-fachen des grössten Aussendurchmessers des Spreizkörpers (5) entspricht.

6. Spreizdübel nach einem der Ansprüche 1 bis 5, dadurch gekennzeichnet, dass die Länge des Zapfens (7) dem 0,3- bis 0,5-fachen des grössten Aussendurchmessers des Spreizkörpers (5) entspricht.

7. Spreizdübel nach einem der Ansprüche 1 bis 6, dadurch gekennzeichnet, dass die Länge der Sacklochbohrung (6) dem 0,8- bis 0,9-fachen der ohne Zapfen (7) gemessenen Länge des Spreizkörpers (5) entspricht.

## Claims

1. An expansion anchor having an expansion sleeve (1) which has at least one longitudinal slit (3) open towards its end in the direction of placement, as well as a hole (2) tapering towards its end in the direction of placement, wherein an expansion body (5) is provided, which tapers at least partially towards the end in the direction of placement, which can be inserted in the hole (2), and which has a recess open towards the end in the direction of placement for partial radial deformation, characterised in that the recess in the expansion body (5) is formed as a blind hole (6) and the expansion body has an outwardly protruding plug (7) on its end face (5b) facing away from the direction of placement, the axial projection of the cross-section of which plug lies within the axial projection of the cross-section of the adjacent region (6a) of the blind hole (6).

2. An expansion anchor according to claim 1, characterised in that the blind hole (6) and the plug (7) are centrally disposed in relation to the expansion body (5).

3. An expansion anchor according to claim 1 or 2, characterised in that the blind hole (6) tapers in the direction of placement.

4. An expansion anchor any one of claims 1 to 3, characterised in that the largest diameter of the blind hole 6 corresponds to 0.3 to 0.5 times the largest outside diameter of the expansion body (5).

5. An expansion anchor according to any one of claims 1 to 4, characterised in that the plug (7) has a circular cross-section with an outside diameter which corresponds to 0.3 to 0.5 times the largest outside diameter of the expansion body (5).

6. An expansion anchor according to any one of claims 1 to 5, characterised in that the length of the plug (7) corresponds to 0.3 to 0.5 times the largest outside diameter of the expansion body (5).

7. An expansion anchor according to any one of claims 1 to 6, characterised in that the length of the blind hole (6) corresponds to 0.8 to 0.9 times the length of the expansion body (5) measured without the plug (7).

## Revendications

1. Cheville à expansion, comprenant une douille expansible (1) qui présente des fentes longitudinales (3) ouvertes en direction de l'extrémité située du côté pose, ainsi qu'un alésage (2) se rétrécissant en direction de l'extrémité située du côté pose, avec un corps d'écartement (5) qui peut être introduit dans l'alésage (2) de la douille expansible (1) et se rétrécit au moins a partie a direction de l'extrémité située du côté pose, ledit corps d'écartement présentant, pour la déformation radiale partielle, un évidement ouvert vers l'extrémité située du côté pose, caractérisée en ce que l'évidement du corps d'écartement (5) est conformé en trou borgne (6) et que le corps d'écartement (5) comporte sur sa surface frontale (5b) opposée à la direction de pose, un téton (7) a saillie axiale dont la projection axiale de la section transversale se situe à l'intérieur de la projection axiale de la section transversale de la zone voisine (6a) du trou borgne (6).

2. Cheville à expansion selon la revendication 1, caractérisée en ce que le trou borgne (6) et le téton (7) sont centrés par rapport au corps d'écartement (5).

3. Cheville à expansion selon l'une des revendications 1 ou 2, caractérisée en ce que le trou borgne (6) se rétrécit dans la direction de pose.

4. Cheville à expansion selon l'une des revendications 1 à 3, caractérisée en ce que le plus grand diamètre du trou borgne (6) correspond à 0,3 à 0,5 fois le diamètre extérieur maximum du corps d'écartement (5).

5. Cheville à expansion selon l'une des revendications 1 à 4, caractérisée a ce que le téton (7) présente une section transversale circulaire avec un diamètre correspondant à 0,3 à 0,5 fois le diamètre extérieur maximum du corps d'écartement (5).

6. Cheville à expansion selon l'une des revendications 1 à 5, caractérisée en ce que la longueur du téton (7) correspond à 0,3 à 0,5 fois le diamètre extérieur maximum du corps d'écartement (5).

7. Cheville à expansion selon l'une des revendications 1 à 6, caractérisée en ce que la longueur du trou borgne (6) correspond à 0,8 à 0,9 fois la longueur du corps d'écartement (5) mesurée sans le téton (7).
